# EUROPEAN PATENT APPLICATION

(11) **EP 4 746 269 A1**
(43) Date of publication of application: **20.05.2026**
(21) Application number: 25213273.3
(22) Date of filing: 04.11.2025
(51) Int. Cl.: H02M 1/00, H02M 1/32, H02M 3/07, H02M 1/36

(54) **OPTIMAL INRUSH CURRENT CONTROL FOR ENVELOPE TRACKING CHARGE PUMP**

(30) Priority: 13.11.2024 US 202418945694
(71) Applicant: Analog Devices International Unlimited Company, Co. Limerick (IE)
(72) Inventor: MUKHOPADHYAY, Rajdeep, Limerick (IE)
(74) Representative: Horler, Philip John

(57) **Abstract**

A charge pump control circuit, comprising an internal reference voltage generator configured to generate a programmable reference voltage ramp, and a control circuit coupled to the internal reference voltage generator. The control circuit configured to control current of a charge pump circuit driving a load by controlling a duty cycle of a transfer phase of the charge pump circuit during a gain-up stage according to a first comparison between the programmable reference voltage ramp and an output voltage across an output capacitor of the charge pump circuit, and a second comparison between a fly capacitor reference voltage and a fly capacitor voltage of a fly capacitor of the charge pump circuit.

## Description

This application claims priority from US patent application no. 18/945,694 filed on 13 November 2024.

### FIELD

The present disclosure relates to optimal inrush current control for an envelope tracking charge pump. In some examples, the charge pump may utilize a programmable reference voltage ramp to regulate the inrush current during voltage transitions, allowing for controlled ramping of the output voltage while maintaining system stability.

### BACKGROUND

Charge pumps are widely used in electronic devices to generate higher voltages from lower voltage sources, making them particularly useful in battery-powered applications. In envelope tracking systems, charge pumps are employed to dynamically adjust the power supply voltage for amplifiers, such as those used in audio or RF applications. This dynamic adjustment allows the power supply to closely follow the envelope of the input signal, potentially improving overall system efficiency. Traditional charge pump designs often utilize fixed voltage conversion ratios and may incorporate basic feedback mechanisms to regulate their output voltage.

Existing charge pump designs face challenges in managing inrush current during voltage transitions, especially in envelope tracking applications. Inrush current, which occurs when the charge pump rapidly increases its output voltage, can lead to voltage drops, electromagnetic interference, and reduced battery life. Additionally, conventional methods for controlling inrush current, such as segmenting power field effect transistors (FETs) or implementing voltage gate source (VGS) control to limit current through the FETs which may result in suboptimal performance, increased complexity, or thermal management issues. These limitations can hinder the efficiency and reliability of envelope tracking systems, particularly in portable devices where power management is critical.

### SUMMARY

This summary is provided to introduce a selection of concepts in a simplified form that are further described below in the detailed description. This summary is not intended to identify essential features of the claimed subject matter, nor is it intended to be used as an aid in determining the scope of the claimed subject matter.

In one aspect, the present disclosure relates to a charge pump control circuit, comprising an internal reference voltage generator configured to generate a programmable reference voltage ramp, and a control circuit coupled to the internal reference voltage generator, the control circuit configured to control current of a charge pump circuit driving a load by controlling a duty cycle of a transfer phase of the charge pump circuit during a gain-up stage according to a first comparison between the programmable reference voltage ramp and an output voltage across an output capacitor of the charge pump circuit, and a second comparison between a fly capacitor reference voltage and a fly capacitor voltage of a fly capacitor of the charge pump circuit.

In embodiments of this aspect, the disclosure according to any one of the above example embodiments, the charge pump control circuit further comprising a first comparator coupled to the internal reference voltage generator and a feedback loop from the output capacitor to compare the output voltage across the output capacitor to the programmable reference voltage ramp, and a second comparator coupled to an output of the first comparator and the fly capacitor to compare a fly voltage across the fly capacitor to the fly capacitor reference voltage.

In embodiments of this aspect, the disclosure according to any one of the above example embodiments, the charge pump control circuit further comprising a clamp circuit coupled to the output of the first comparator, wherein the clamp circuit is configured to clamp the output of the first comparator to a threshold less than a battery voltage of the charge pump circuit.

In embodiments of this aspect, the disclosure according to any one of the above example embodiments, the charge pump control circuit further comprising logic circuitry coupled to the second comparator and a transfer switch of the charge pump, the logic circuitry configured to control the transfer switch to adjust the duty cycle of the charge pump circuit based on an output of the second comparator.

In embodiments of this aspect, the disclosure according to any one of the above example embodiments, wherein the internal reference voltage generator controls a slope of the programmable reference voltage ramp based on demand of the load.

In embodiments of this aspect, the disclosure according to any one of the above example embodiments, wherein the control circuit is further configured to increase the duty cycle of the transfer phase when the output voltage is below the programmable reference voltage ramp and the fly capacitor voltage is greater than the fly capacitor reference voltage during the transfer phase.

In embodiments of this aspect, the disclosure according to any one of the above example embodiments, wherein the control circuit is further configured to reset the duty cycle of the transfer phase at a termination of the gain-up stage.

In one aspect, the present disclosure relates to a method for controlling a charge pump circuit, comprising generating a programmable reference voltage ramp, and controlling current of the charge pump circuit driving a load by controlling a duty cycle of a transfer phase of the charge pump circuit during a gain-up stage according to a first comparison between the programmable reference voltage ramp and an output voltage across an output capacitor of the charge pump circuit, and a second comparison between a fly capacitor reference voltage and a fly capacitor voltage of a fly capacitor of the charge pump circuit.

In embodiments of this aspect, the disclosure according to any one of the above example embodiments, the method further comprising comparing, using a first comparator, the output voltage across the output capacitor to the programmable reference voltage ramp, and comparing, using a second comparator coupled to an output of the first comparator, a fly voltage across the fly capacitor to the fly capacitor reference voltage.

In embodiments of this aspect, the disclosure according to any one of the above example embodiments, the method further comprising clamping the output of the first comparator to a threshold less than a battery voltage of the charge pump circuit.

In embodiments of this aspect, the disclosure according to any one of the above example embodiments, the method further comprising controlling a transfer switch of the charge pump to adjust the duty cycle of the charge pump circuit based on an output of the second comparator.

In embodiments of this aspect, the disclosure according to any one of the above example embodiments, the method further comprising controlling a slope of the programmable reference voltage ramp based on demand of the load.

In embodiments of this aspect, the disclosure according to any one of the above example embodiments, the method further comprising increasing the duty cycle of the transfer phase when the output voltage is below the programmable reference voltage ramp and the fly capacitor voltage is greater than the fly capacitor reference voltage during the transfer phase.

In embodiments of this aspect, the disclosure according to any one of the above example embodiments, the method further comprising resetting the duty cycle of the transfer phase at a termination of the gain-up stage.

In one aspect, the present disclosure relates to an electronic device comprising an audio circuit, a processor for controlling the audio circuit, a charge pump circuit for driving the audio circuit in accordance with the control of the processor, and a charge pump control circuit comprising an internal reference voltage generator configured to generate a programmable reference voltage ramp in response to instructions from the processor, and a control circuit coupled to the internal reference voltage generator, the control circuit configured to control current of the charge pump circuit driving the audio circuit by controlling a duty cycle of a transfer phase of the charge pump circuit during a gain-up stage according to a) a first comparison between the programmable reference voltage ramp and an output voltage across an output capacitor of the charge pump circuit, and b) a second comparison between a fly capacitor reference voltage and a fly capacitor voltage of a fly capacitor of the charge pump circuit.

In embodiments of this aspect, the disclosure according to any one of the above example embodiments, wherein the charge pump control circuit further comprises a first comparator coupled to the internal reference voltage generator and a feedback loop from the output capacitor to compare the output voltage across the output capacitor to the programmable reference voltage ramp, and a second comparator coupled to an output of the first comparator and the fly capacitor to compare a fly voltage across the fly capacitor to the fly capacitor reference voltage.

In embodiments of this aspect, the disclosure according to any one of the above example embodiments, wherein the charge pump control circuit further comprises a clamp circuit coupled to the output of the first comparator, wherein the clamp circuit is configured to clamp the output of the first comparator to a threshold less than a battery voltage of the charge pump circuit.

In embodiments of this aspect, the disclosure according to any one of the above example embodiments, wherein the charge pump control circuit further comprises logic circuitry coupled to the second comparator and a transfer switch of the charge pump circuit, the logic circuitry is configured to control the transfer switch to adjust the duty cycle of the charge pump circuit based on an output of the second comparator.

In embodiments of this aspect, the disclosure according to any one of the above example embodiments, wherein the internal reference voltage generator may control a slope of the programmable reference voltage ramp based on demand of the audio circuit.

In embodiments of this aspect, the disclosure according to any one of the above example embodiments, wherein the control circuit is further configured to increase the duty cycle of the transfer phase when the output voltage is below the programmable reference voltage ramp and the fly capacitor voltage is greater than the fly capacitor reference voltage during the transfer phase.

The foregoing general description of the illustrative embodiments and the following detailed description thereof are merely exemplary aspects of the teachings of this disclosure and are not restrictive.

### BRIEF DESCRIPTION OF THE DRAWINGS

So that the way the above-recited features of the present disclosure can be understood in detail, a more particular description of the disclosure, briefly summarized above, may be made by reference to example embodiments, some of which are illustrated in the appended drawings. It is to be noted, however, that the appended drawings illustrate only example embodiments of this disclosure and are therefore not to be considered limiting of its scope, for the disclosure may admit to other equally effective example embodiments.
FIG. 1A illustrates a block diagram of a system for powering an amplifier with envelope tracking, according to aspects of the present disclosure.
FIG. 1B illustrates a flowchart of a method for operating an envelope tracking charge pump, according to aspects of the present disclosure.
FIG. 1C illustrates a state-of-art charge pump vs desired charge pump voltage/current plot, according to aspects of the present disclosure.
FIG. 2A illustrates a charge pump circuit, according to aspects of the present disclosure.
FIG. 2B illustrates another charge pump circuit which is the configuration in FIG. 2A with an additional gain stage, according to aspects of the present disclosure.
FIG. 3A illustrates a charge pump control circuit for regulating inrush current, according to aspects of the present disclosure.
FIG. 3B illustrates a flowchart of a method for controlling an envelope tracking charge pump, according to aspects of the present disclosure.
FIG. 3C illustrates a charge pump control plot showing various signals during a gain-up phase, according to aspects of the present disclosure.
FIG. 4A illustrates a charge pump current comparison plot for different control methods, according to aspects of the present disclosure.
FIG. 4B illustrates a charge pump voltage comparison plot for different control methods, according to aspects of the present disclosure.
FIG. 5 illustrates a block diagram of an electronic device with a charge pump system, according to aspects of the present disclosure.

### DETAILED DESCRIPTION

The present disclosure relates to a system for controlling inrush current in envelope tracking charge pumps. Envelope tracking charge pumps are commonly used in electronic devices to dynamically adjust the power supply voltage for amplifiers, such as those used in audio or RF applications. This dynamic adjustment allows the power supply to closely follow the envelope of the input signal, potentially improving overall system efficiency. However, managing inrush current during voltage transitions, presents a challenge. Inrush current, which occurs when the charge pump rapidly increases its output voltage, can lead to voltage drops, electromagnetic interference, and reduced battery life. The system disclosed herein addresses these challenges by introducing a control circuit and method for regulating inrush current in envelope tracking charge pumps. The disclosed method involves controlling the voltage across a fly capacitor against a programmable reference voltage ramp, offering improved performance and reliability compared to existing solutions.

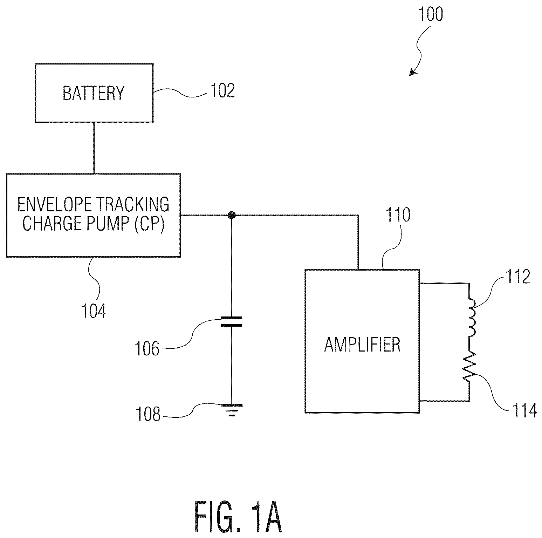

Referring to FIG. 1A, a system 100 for powering an amplifier with an envelope tracking charge pump (CP) is illustrated. The system 100 may include a battery 102, an envelope tracking CP 104, an output capacitor 106, a ground connection 108, an amplifier 110, and a load represented by a load inductance 112 and a load resistance 114.

The battery 102, which may be a rechargeable battery or a disposable battery, provides a power source for the system 100. The envelope tracking CP 104 may be connected to the battery 102 and may be configured to convert the battery voltage to a higher or lower voltage level as needed by the amplifier 110. The envelope tracking CP 104 may be implemented using various CP topologies, such as a Dickson CP, a voltage doubler, a voltage inverter, a fractional CP, a switched-capacitor CP, a cross-coupled CP, a Fibonacci CP, an exponential CP, a multiphase CP, or an adaptive CP, among others.

The output capacitor 106 may be connected between the envelope tracking CP 104 and the ground connection 108. The output capacitor 106 may serve to smooth the output voltage of the envelope tracking CP 104, reducing voltage ripple and noise. The ground connection 108 provides a reference potential for the system 100.

The amplifier 110 may be connected to the output of the envelope tracking CP 104 and may be powered by the voltage across the output capacitor 106. The amplifier 110 may be a class-D amplifier, a class-AB amplifier, a class-G amplifier, a class-H amplifier, or any other type of amplifier suitable for the application. The amplifier 110 amplifies an input signal, such as an audio signal or an RF signal, and drives the load, which may be represented by the load inductance 112 and the load resistance 114. The load inductance 112 and load resistance 114 may represent the characteristics of a speaker, an antenna, or any other load that the amplifier 110 may be designed to drive.

In operation, the envelope tracking CP 104 dynamically adjusts its output voltage to closely follow the envelope of the input signal to the amplifier 110. This dynamic adjustment of the power supply voltage can improve the efficiency of the amplifier 110 and reduce power consumption. However, rapid changes in the output voltage of the envelope tracking CP 104 can cause large inrush currents, which can lead to voltage drops, electromagnetic interference, and other issues. To address these challenges, the system 100 may implement a method for regulating inrush current in the envelope tracking CP 104, as described in further detail below.

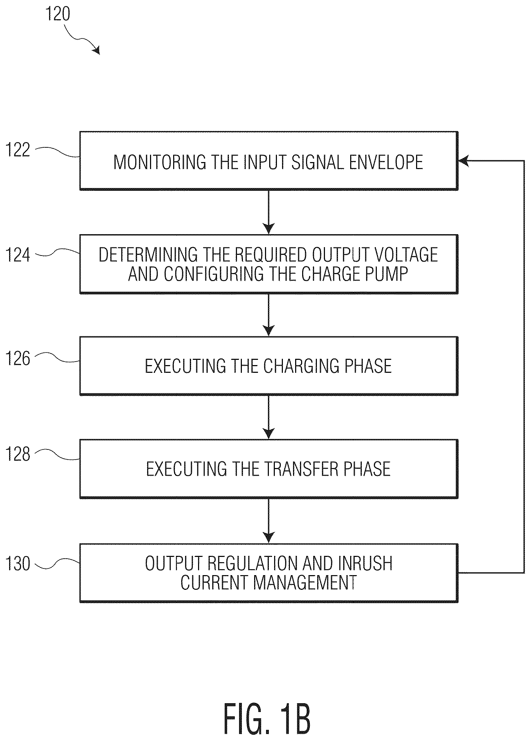

Referring to FIG. 1B, a flowchart of a method 120 for operating an envelope tracking CP is illustrated. The method 120 includes several steps including step 122 for monitoring the input signal envelope, step 124 for determining the required output voltage and configuring the CP, step 126 for executing the charging phase, step 128 for executing the transfer phase, and step 130 for output regulation and inrush current management.

The method 120 begins with step 122, which involves monitoring the envelope of the input signal. This step may involve continuously tracking the amplitude of the input signal, such as an audio or RF signal. The envelope of the input signal may provide information about the instantaneous power requirements of the load, which can be used to dynamically adjust the output voltage of the CP.

Step 124 may involve determining the required output voltage and configuring the CP. In this step, the system may calculate the output voltage (e.g. optimal) needed to maintain efficiency based on the envelope of the input signal. The CP may then be set to the appropriate mode (e.g., 1x, 1.5x, 2x) to achieve the desired output voltage. The configuration of the CP may be dynamically adjusted based on the changing power requirements of the load.

Step 126 may involve executing the charging phase. During this phase, the fly capacitor of the CP may be charged from the voltage source through the CP switches. The charging phase may involve transferring charge from the input voltage source to the fly capacitor, thereby storing energy for the subsequent transfer phase.

After the charging phase, the method 120 proceeds to step 128, which involves executing the transfer phase. In this phase, the battery and the charged fly capacitor may be connected in series with the load to boost the output voltage. The transfer phase may involve transferring energy from the battery and stored energy from the flying capacitor to the output capacitor and the load, thereby increasing the output voltage of the CP.

Step 130 may involve output regulation and inrush current management. This step may involve monitoring the output voltage and adjusting the operation of the CP to maintain the desired output voltage level and managing the inrush current during voltage transitions to prevent excessive current peaks and maintain system stability.

The process loops back to step 122 allowing the method to continuously repeat to track changes in the input signal envelope and maintain efficiency. This cyclic nature allows the CP to dynamically adjust its operation based on the changing input conditions.

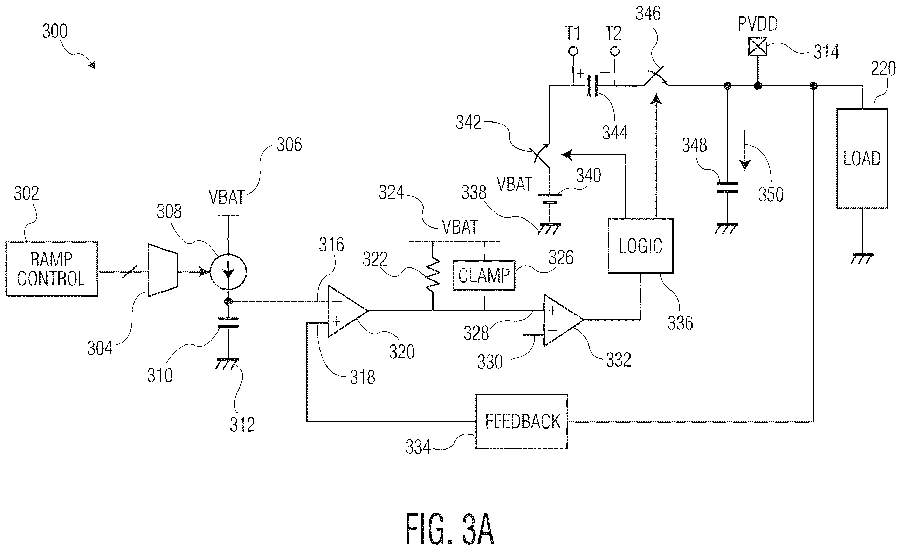

In some cases, the method 120 may be implemented in a CP control circuit such as the disclosed circuit shown in FIG. 3A to control inrush current during the transfer phase. The control circuit may include components and circuitry for executing the steps of the method 120, such as an internal reference voltage generator for generating a programmable reference voltage ramp, and a control circuit for controlling the current of the CP based on the reference voltage ramp and the output voltage. The control circuit may also include comparators for comparing the reference voltage ramp and the output voltage, and for comparing the voltage across the fly capacitor with a reference voltage. Further details of the control circuit are described with reference to FIG. 3A.

In some aspects, the method 120 may be implemented in a CP control circuit that may also be part of an electronic device, such as a mobile phone or a tablet. The electronic device may include a processor for controlling the operation of the CP and the CP control circuit, and an audio circuit or an RF circuit that may be powered by the CP. The method 120 may enable the electronic device to interact with the control circuit to dynamically adjust the power supply voltage for the audio or RF circuit based on the envelope of the input signal, thereby improving the efficiency and performance of the electronic device.

Before delving into the details of the control circuit, it may be beneficial to compare the performance of conventional inrush current control methods with the disclosed inrush current control approach presented in this disclosure. Conventional methods often result in significant inrush current and transients including voltage droop and resultant voltage ringing (e.g. voltage overshoot) during transitions, which can lead to various system issues. In contrast, the disclosed switching method introduced here aims to provide more controlled voltage ramping and current regulation, potentially offering improved efficiency and reliability. This comparison helps to highlight the advantages of the proposed solution and sets the stage for a more detailed examination of the control circuit implementation.

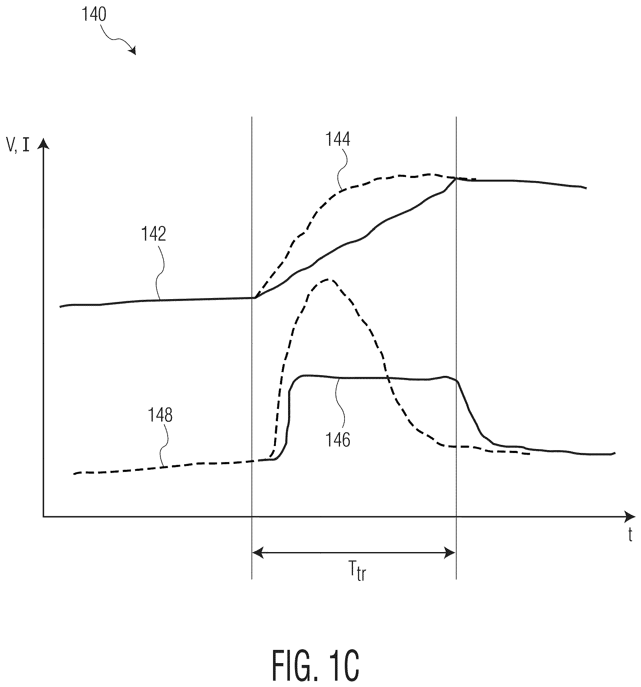

Referring to FIG. 1C, a CP voltage/current plot 140 comparing the performance of the state-of-art CP control and disclosed CP control is illustrated. The plot 140 compares the voltage and current characteristics as a result of the state-of-art CP control and the disclosed CP control over time. The CP voltage 144 and the CP current 148 as a result of the state-of-art CP control are represented by dashed lines, while the CP voltage 142 and the CP current 146 as a result of the disclosed CP control are represented by solid lines.

The voltage 144 as a result of the state-of-art CP control shows a rapid rise and overshoot during the transition time Ttr, followed by a settling period. This rapid rise and overshoot can cause large inrush currents, leading to potential issues such as voltage drops, electromagnetic interference, and reduced battery life. On the other hand, the voltage 142 as a result of the disclosed CP control shows a more controlled and gradual rise during the transition time Ttr, without any significant overshoot. This controlled rise can help to reduce (e.g., minimize) inrush current and maintain system stability.

The current 148 as a result of the state-of-art CP control shows a significant peak during the transition time Ttr, indicating a large inrush current. This peak can cause stress on the components of the CP and may trigger protection circuits, leading to system shutdown. In contrast, the current 146 as a result of the disclosed CP control shows a quick rise to a steady level and maintains it throughout the transition period. This steady current profile indicates a controlled inrush current, which can help to prevent system shutdown and improve the reliability of the CP.

In some aspects, the voltage 142 and current 146 as a result of the disclosed CP control may be achieved by implementing the disclosed inrush current control method described in the present disclosure and in particular with reference to the disclosed control circuit in FIG. 3A. This method generally involves controlling the voltage across a fly capacitor against a programmable reference voltage ramp, which can help to regulate the inrush current and maintain a controlled output voltage during transitions. The programmable reference voltage ramp may be adjusted based on the specific requirements of the application, allowing for flexible and efficient control of the CP operation.

In some cases, the desired voltage 142 and current 146 may be achieved by implementing different control methods or using different CP topologies. For example, the CP may be configured as a voltage doubler, a voltage inverter, a fractional CP, a switched-capacitor CP, a cross-coupled CP, a Fibonacci CP, an exponential CP, a multiphase CP, or an adaptive CP, among others. Each of these topologies may offer different advantages in terms of efficiency, output voltage range, and complexity, allowing designers to choose the most suitable type for their specific application requirements.

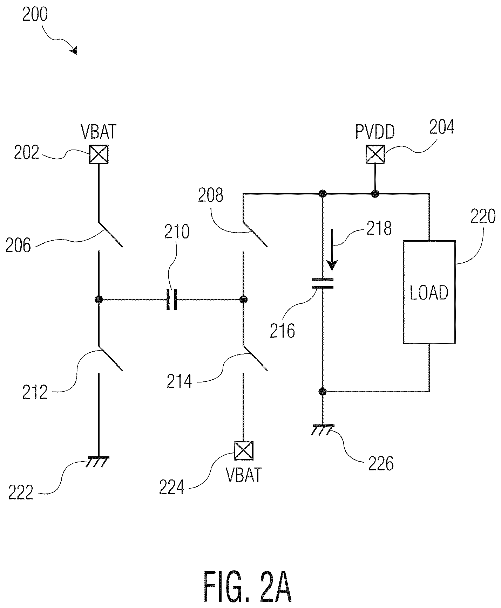

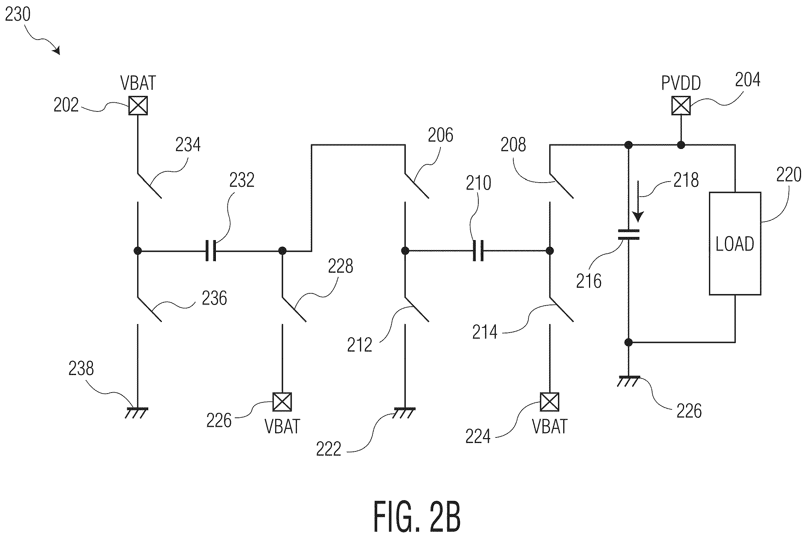

Before discussing the disclosed CP control method in detail, it may be helpful to examine the structure and functionality of some CP designs. Understanding the basic principles and configurations of CPs can provide context for appreciating the advantages of the proposed control method. These details are now described with respect to FIGs. 2A and 2B.

Referring to FIG. 2A, a CP circuit 200 with n=2 gain stages (i.e., battery and one fly capacitor) is illustrated. The CP circuit 200 includes a CP battery terminal 202, a CP output terminal 204, a first switch 206, a second switch 208, a fly capacitor 210, a third switch 212, a fourth switch 214, a CPVDD output capacitor 216, a CPVDD output capacitor current 218, and a load 220. The CP battery terminal 202 and the CP output terminal 204 serve as the input and output connections, respectively, for the CP circuit 200.

The first switch 206 may be connected between the CP battery terminal 202 and one terminal of the fly capacitor 210. The second switch 208 may be connected between the other terminal of the fly capacitor 210 and the CP output terminal 204. The third switch 212 may be connected between the junction of the first switch 206 and the fly capacitor 210, and a chassis ground terminal 222. The fourth switch 214 may be positioned between the junction of the second switch 208 and the fly capacitor 210, and a battery terminal 224.

The CPVDD output capacitor 216 may be connected between the CP output terminal 204 and a second ground connection 226. The CPVDD output capacitor current 218 is represented by an arrow indicating the flow of current into or out of the CPVDD output capacitor 216. A load 220 is shown connected between the CP output terminal 204 and the second ground connection 226, representing the circuit or device being powered by the CP.

In operation, the CP circuit 200 alternates between a charging phase and a transfer phase. During the charging phase, the third switch 212 and fourth switch 214 are closed, allowing the fly capacitor 210 to be charged from the positive battery terminal 224 and chassis ground 222. During the transfer phase, the third switch 212 and fourth switch 214 are opened, and the first switch 206 and second switch 208 are closed. This connects the charged fly capacitor 210 in series with the positive battery terminal 202 and the load, creating n=2 gain stages effectively doubling the voltage at the CP output terminal 204. The CPVDD output capacitor 216 smooths the output voltage, reducing voltage ripple and noise.

In some aspects, the CP circuit 200 may be configured as a voltage doubler, where the output voltage may be approximately twice the input voltage. This configuration may be particularly useful in applications where a higher output voltage may be needed, such as in audio amplifiers or RF power amplifiers.

In other aspects, the CP circuit 200 may be configured in other ways to achieve different voltage conversion ratios. For example, the CP circuit 200 may be configured as a voltage inverter, a fractional CP, a switched-capacitor CP, or a cross-coupled CP, among others. Each of these configurations may offer different advantages in terms of efficiency, output voltage range, and complexity, allowing designers to choose the most suitable type for their specific application requirements.

In yet other aspects, the CP circuit 200 may include additional components or circuitry for enhanced functionality. For example, the CP circuit 200 may include additional switches, capacitors, or control circuits for more complex voltage conversion schemes, or for improved control over the charging and transfer phases. The specific configuration and operation of the CP circuit 200 may be determined based on the specific requirements of the application, such as the desired output voltage range, the power requirements of the load, and the characteristics of the input power source.

Referring to FIG. 2B, a CP circuit 230 with three gain stages (i.e. battery and two fly capacitors) is illustrated. The CP circuit 230 is an extension of the CP circuit 200 shown in FIG. 2A, with additional components to achieve three stages. The CP circuit 230 in FIG. 2B includes CP battery terminal 202, CP output terminal 204, first switch 206, second switch 208, fly capacitor 210, third switch 212, fourth switch 214, CPVDD output capacitor 216, CPVDD output capacitor current 218, load 220, chassis ground terminal 222, battery terminal 224, battery terminal 226, fifth switch 228, second fly capacitor 232, sixth switch 234, seventh switch 236, and third ground connection 238.

The CP circuit 230 includes a CP battery terminal 202 and a CP output terminal 204, which serve as the input and output connections, respectively. A first switch 206 and a second switch 208 are connected to a first fly capacitor 210, forming a first gain stage. A third switch 212 and a fourth switch 214 are positioned to control the charging and discharging of the first fly capacitor 210.

The CP circuit 230 also includes a second gain stage, which may include a fifth switch 228, a second fly capacitor 232, a sixth switch 234, and a seventh switch 236. The fifth switch 228 may be connected between the CP battery terminal 226 and the second fly capacitor 232. The sixth switch 234 is connected to control the charging and transfer of the second fly capacitor 232. This configuration allows the CP circuit to support n=3 gain stages (e.g. battery, first fly capacitor and second fly capacitor), providing greater flexibility in adjusting the output voltage.

In operation, the CP circuit 230 alternates between a charging phase and a transfer phase for each gain stage. During the charging phase, the switches connected to the fly capacitors are controlled to charge the fly capacitors from the battery terminals. For example, during the charging phase, switches 228 and 236 are closed to charge fly capacitor 232, switches 212 and 214 are closed to charge fly capacitor 210, while switches 206, 208 and 234 are open. During the transfer phase, switches 212, 214, 228 and 238 are open, while switches 206, 208 and 234 are closed placing the battery terminal 202 in series with both fly capacitors 210 and 232, effectively boosting (e.g., tripling) the voltage at the CP output terminal 204. The CPVDD output capacitor 216 smooths the output voltage, reducing voltage ripple and noise.

Now that some example CP circuits have been described, the control of these CP circuits according to the disclosed control method is presented. This control method may address the challenges associated with conventional CP control techniques, such as inrush current and voltage overshoot during transitions. The disclosed control method may provide a more precise and efficient way to manage the CP operation, potentially resulting in improved performance and reliability. In the following sections, the details of this control method, including its implementation and advantages, are explored in depth.

Referring to FIG. 3A, a disclosed CP control circuit 300 is illustrated. The CP control circuit 300 may be designed to regulate inrush current in an envelope tracking CP, such as the CP circuit 200 shown in FIG. 2A or the CP circuit 230 shown in FIG. 2B. The CP control circuit 300 includes ramp control 302, multiplexer 304, battery connection 306, current source 308, capacitor 310, ground terminal 312, CP output (PVDD) output 314, ramp input (PVDDREF) 316, feedback (PVDDSENSE) 318, first comparator 320, resistor 322, battery terminal 324, clamp circuit 326, fly capacitor reference (CFLYREF) input 328, fly capacitor voltage (VCF) input 330, second comparator 332, feedback circuit 334, logic circuit 336, ground terminal 338, battery 340, first switch 342, fly capacitor 344, fly capacitor charging terminals T1 and T2, second switch 346, output capacitor 348, output capacitor voltage (CPVDD) and output capacitor current (IPVDD) 350 and load 220.

It is noted that, the switches in the charge pump circuits 2A, 2B and 3A may be implemented using transistors such as metal-oxide-semiconductor field-effect transistors (MOSFETs) or other types of transistors suitable for switching applications. The use of transistors as switches may allow for efficient and controllable operation of the charge pump, enabling precise timing and control of the charging and transfer phases. Control of the switches may be implemented in hardware, such as through dedicated logic circuits, or in software running on a processor. Software control may provide flexibility to dynamically adjust switching parameters based on operating conditions or application requirements.

The CP control circuit 300 includes a voltage generator that may be configured to generate a programmable reference voltage ramp. This reference voltage ramp may be adjusted based on the specific requirements of the application, such as the desired transition time or the power requirements of the load. The reference voltage ramp may be generated using various techniques, such as by charging a capacitor with a constant current source, or by using a digital-to-analog converter to generate a linear voltage ramp. In some cases, the slope of the reference voltage ramp may be programmable, allowing system designers to define the desired ramp rate based on specific application requirements.

In one example, ramp control 302 connected to a multiplexer 304. The ramp control 302 may include various components and circuitry for generating the voltage ramp, such as a digital-to-analog converter, a voltage reference, or a ramp generator circuit, among others. The ramp control 302 may also include programmable settings for adjusting the slope of the voltage ramp based on specific application requirements.

The multiplexer 304 may be connected to the ramp control 302 and may be configured to select one of multiple input signals based on a control signal. The multiplexer 304 may be implemented using various types of multiplexer circuits, such as analog multiplexers, digital multiplexers, or programmable logic devices, among others. The multiplexer 304 may be used to select the appropriate input signal for the ramp control 302, such as a programmable ramp rate signal, a feedback signal from the CP circuit, or a default ramp rate signal, among others.

The CP control circuit 300 also includes a current source 308 connected to a capacitor 310. The current source 308 may be configured to provide a constant current to the capacitor 310, thereby generating a voltage ramp across the capacitor 310. The current source 308 may be implemented using various types of current source circuits, such as a resistor-based current source, a transistor-based current source, or a current mirror circuit, among others. The current source 308 may be controlled by the ramp control 302 to adjust the slope of the voltage ramp based on the programmable ramp rate.

The capacitor 310 may be connected to the current source 308 and a ground terminal 312. The capacitor 310 may be charged by the current source 308 based on the voltage ramp. The capacitor 310 may be implemented using various types of capacitors, such as ceramic capacitors, electrolytic capacitors, or film capacitors, among others. The value of the capacitor 310 may be selected based on the desired ramp rate and the current provided by the current source 308.

CP control circuit 300 includes a first comparator 320 coupled to the internal reference voltage generator and a feedback loop from the output capacitor to compare the sensed output voltage PVDDSENSE across the output capacitor received via input terminal 318 to the programmable reference voltage ramp PVDDREF received via input terminal 316. The first comparator 320 may be an error amplifier that generates an error signal based on the difference between the programmable reference voltage ramp and the output voltage. This error signal may be used to adjust the operation of the CP circuit to bring the output voltage closer to the reference voltage ramp. In some cases, the first comparator 320 may be implemented using various types of comparator circuits, such as an operational amplifier configured as a comparator, a dedicated comparator IC, or a comparator circuit implemented in a digital signal processor or a microcontroller.

The CP control circuit 300 also includes a second comparator 332 coupled to an output of the first comparator 320 and the fly capacitor to compare a fly voltage (VCF) across the fly capacitor received via input terminal 330 to the fly capacitor reference voltage CFLYREF received via input terminal 328. The second comparator 332 may be a PWM comparator that generates a PWM signal based on the difference between the fly capacitor reference voltage and the fly capacitor voltage. This PWM signal may be used to control the duty cycle of the CP transfer switches 342 and 346 during the transfer phase, thereby regulating the charge transfer from the fly capacitor to the output capacitor and the load. In some cases, the second comparator 332 may be implemented using various types of comparator circuits, similar to the first comparator 320.

In operation, the CP control circuit 300 uses the first comparator 320 to compare the output voltage PVDDSENSE of the CP circuit with the programmable reference voltage ramp PVDDREF via input terminals 316 and 318. If the output voltage PVDDSENSE is lower than the reference voltage ramp PVDDREF, the first comparator 320 generates an error signal that increases the fly capacitor reference voltage on input terminal 328. This increase in fly capacitor reference voltage causes the second comparator 332 to increase the duty cycle of the CP switches 342 and 346 in accordance with the ramp amplitude, allowing more and more charge to be transferred from battery 340 and the fly capacitor 344 to the output capacitor and the load, thereby gradually increasing the output voltage at output connection 314 over the period of the ramp. When the output voltage PVDDSENSE is equal to the reference voltage ramp PVDDREF, the first comparator 320 generates a signal that causes the second comparator 332 to turn OFF the CP switches 342 and 346 during the remaining portion of the duty cycle, thereby allowing the load to at least partially discharge the fly capacitor thereby decreasing the output voltage PVDDSENSE. This feedback control mechanism allows the CP control circuit 300 to dynamically adjust the output voltage of the CP circuit to closely follow without exceeding the programmable reference voltage ramp PVDDREF, thereby achieving inrush current control.

In some implementations logic circuit 336 of the charge pump control circuit may focus on controlling one switch, such as switch 342, during the transfer phase. During this single switch control, the remaining switch 346 may be controlled by other logic. However, in other implementations, the logic circuit 336 may extend to controlling both switches 342 and 346 simultaneously. This flexibility in switch control may allow for more precise regulation of charge transfer from the fly capacitor to the output capacitor and load, potentially enabling finer adjustments to the output voltage and improved inrush current management in different operating scenarios or application requirements.

In one example, CP control circuit 300 further includes a clamp circuit 326 and resistor 322 coupled to the output of the first comparator 320 and to battery terminal 324. The clamp circuit 326 may be configured to limit the voltage of the fly capacitor reference voltage a CFLYREF to VBAT - VLIM, where VLIM is a pre-defined (e.g. maximum) voltage drop across resistor 322. This clamping function can prevent an excessive voltage drop across the fly capacitor during the transfer phase, thereby limiting the amount of inrush current the CP can output. This clamping is useful for preventing damage to the CP circuit or other components of the system. The transfer current during the transfer phase may be proportional to VLIM. By clamping CFLYREF in this manner, the CP control circuit 300 may provide an extension to incorporate current limit (e.g. maximum current limit) control. If the CP hits this current limit or CFLYREF hits this clamp voltage, it may lose regulation of PVDD and no longer track PVDD with respect to PVDDRAMP. The clamp voltage may be set to a sufficiently high value to ensure proper regulation and tracking, while being useful to limit line transients, and to limit current due to other reasons such as overload conditions.

The CP control circuit 300 also includes logic circuitry 336 coupled to the second comparator 332 and a transfer switches 342 and 346 of the CP. The logic circuitry 336 may be configured to control the transfer switches 342 and 346 to adjust the duty cycle of the CP circuit based on an output of the second comparator 332. The logic circuitry 336 may include various types of digital or analog logic circuits, such logic gates, flip-flops, or microcontrollers, among others. The logic circuitry 336 may be configured to generate control signals for the CP switches 342 and 346 based on the output of the second comparator 332, thereby controlling the charge transfer from the fly capacitor to the output capacitor and the load.

For example, in operation, the logic circuitry 336 receives the output of the second comparator 332, which represents the difference between the fly capacitor reference voltage and the fly capacitor voltage. If the fly capacitor voltage is lower than the fly capacitor reference voltage, the logic circuitry 336 generates a control signal that increases the duty cycle of the CP switches 342 and 346, allowing more charge to be transferred from the fly capacitor to the output capacitor and the load. Conversely, if the fly capacitor voltage is higher than the fly capacitor reference voltage, the logic circuitry 336 generates a control signal that decreases the duty cycle of the CP switches 342 and 346, reducing the charge transfer from the fly capacitor to the output capacitor and the load.

In some cases, the control circuit may be configured to reset the duty cycle of the transfer phase at a termination of the gain-up stage. This reset may involve setting the duty cycle of the CP switches back to a default or initial value, thereby preparing the CP for the next gain-up stage. This reset function may be particularly useful in applications where the CP supports multiple gain-up stages with different transition times.

In other cases, the control circuit may be configured to control the current of the CP circuit driving a load by controlling a duty cycle of a transfer phase of the CP circuit during a gain-up stage. This control may involve adjusting the duty cycle of the CP switches based on the comparison between the programmable ramp and the feedback from the CP output capacitor, as well as the comparison between the fly capacitor reference voltage and the fly capacitor voltage. By controlling the duty cycle of the CP switches, the control circuit can regulate the inrush current of the CP, thereby achieving inrush current control.

In yet other cases, the CP control circuit can reset and restart ramping of the programmable ramp when a new gain-up phase is initiated. This reset and restart function may be particularly useful in applications where the CP supports multiple gain-up stages with different transition times. By resetting and restarting the ramping of the programmable ramp, the CP control circuit can ensure that the CP is able to smoothly transition from one gain-up stage to the next, thereby maintaining inrush current control.

It is noted that fly capacitor 344 may also be coupled via terminals T1 and T2 to charging phase switches that are not shown in FIG. 3A. These charging phase switches, which may be similar to switches 206 and 208 in FIG. 2A, may be responsible for charging the fly capacitor 344 during the charging phase of the CP operation. The controller, which may include the logic circuitry 336, may be configured to open the transfer switches 342 and 346 during the charging phase when the charging switches are closed, and vice versa. Charging switches 342 and 346 may be controlled by logic 336 in FIG. 3A or by another control circuit.

In either case, during the charging phase, the charge switches may connect the fly capacitor 344 to the battery voltage, allowing it to accumulate charge. Subsequently, during the transfer phase, the transfer switches 342 and 346 may connect the charged fly capacitor 344 in series with the battery to boost the output voltage. This coordinated switching between charging and transfer phases may enable the CP to maintain a stable output voltage while optimizing inrush current control.

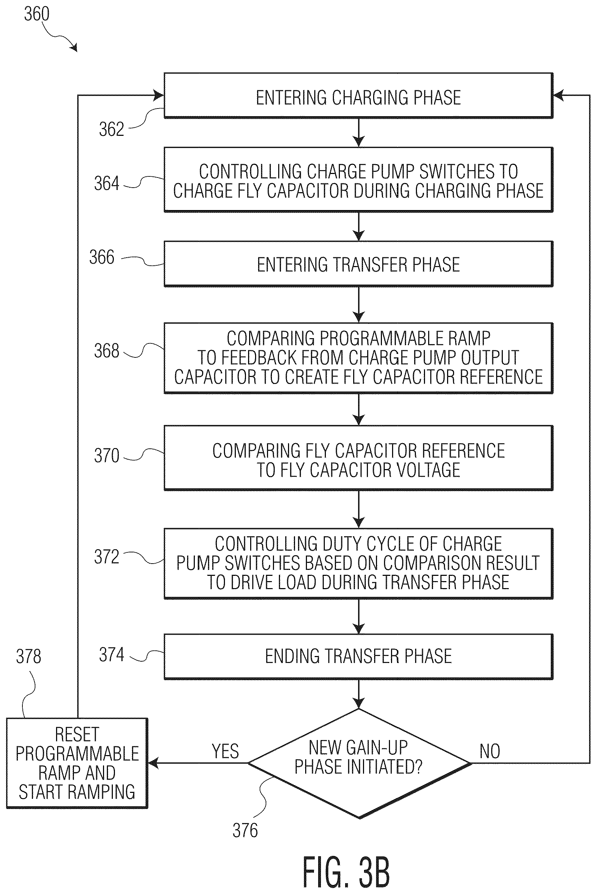

FIG. 3B illustrates a flowchart of a disclosed method 360 for controlling an envelope tracking CP. The method may include several steps that correspond to the operation of the disclosed CP control circuit 300 shown in FIG. 3A. The method 360 in FIG. 3B includes step 362 for entering the charging phase, step 364 for controlling CP switches during the charging phase, step 366 for entering the transfer phase, step 368 for comparing the programmable ramp to feedback, step 370 for comparing the fly capacitor reference to the fly capacitor voltage, step 372 for controlling the duty cycle of CP switches, step 374 for ending the transfer phase, decision step 376 for determining if a new gain-up phase is initiated, and step 378 for resetting the programmable ramp if a new gain-up phase is initiated.

Step 362 involves entering the charging phase. During this phase, the CP prepares to charge the fly capacitor 344. Although not shown in FIG. 3A, charge switches similar to switches 212 and 214 from FIG. 2A may also be connected to fly capacitor 344. These charge switches may be controlled to charge the fly capacitor 344 to the battery voltage during the charging phase of the CP operation. The charge switches may connect the fly capacitor 344 to the battery and ground, allowing it to accumulate charge. Once the fly capacitor 344 is charged, the charging switches are open and the transfer switches 342 and 346 may then be controlled by the logic circuitry 336 to transfer the charge to the output capacitor 348 and the load during the transfer phase. This alternating process of charging and transferring charge may allow the CP to boost the voltage efficiently while maintaining control over inrush current.

Step 366 marks the beginning of the transfer phase. In this phase, the CP prepares to transfer the charge from the fly capacitor 344 to the output capacitor 348. Step 368 during the charging phase involves comparing the programmable reference voltage ramp PVDDREF received via input terminal 316 to the feedback PVDDSENSE received via input terminal 318 from the output capacitor 348. This comparison may be performed by the first comparator 320, which generates a fly capacitor reference voltage CFLYREF based on the difference between PVDDREF and PVDDSENSE.

In step 370, the second comparator 332 compares the fly capacitor reference voltage CFLYREF received via input terminal 328 to the fly capacitor voltage (VCF) received via input terminal 330. Step 372 involves controlling the duty cycle of the CP switches 342 and 346 based on the output of the second comparator 332. This control may be performed by the logic circuitry 336, which adjusts the duty cycle to regulate the charge transfer from the fly capacitor 344 to the output capacitor 348.

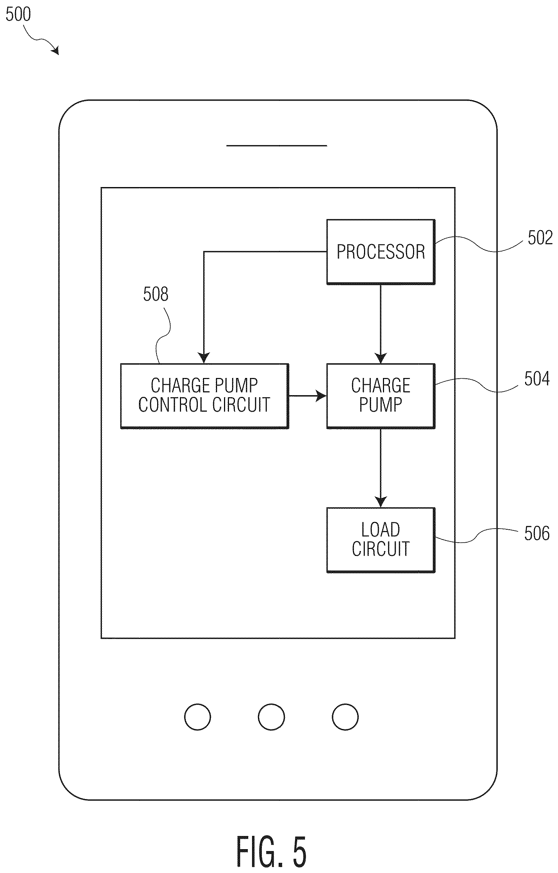

Step 374 marks the end of the transfer phase. At this point, the CP has completed one cycle of charging and transferring charge. In step 376, at the gain-up cycle, the method determines if a new gain-up phase is initiated. This may involve checking for a control signal 382 from a controller (e.g. processor 502 in FIG. 5) or monitoring the envelope of the input signal.

If a new gain-up phase is initiated, the method proceeds to step 378, where the programmable ramp may be reset. This may involve resetting the ramp control 302 and the multiplexer 304 to prepare for the new gain-up phase. If no new gain-up phase is initiated, the method loops back to step 362 for the next transfer phase.

In some implementations, the charge pump control circuit may support multiple gain stages by resetting and restarting the programmable reference voltage ramp PVDDREF for each new gain stage. This approach may allow for more flexible control of the charge pump output voltage across a wider range. Instead of continuously ramping PVDDREF, the control circuit may ramp PVDDREF between 0V and VBAT/K, where K is a feedback factor. The output voltage PVDD may be divided by this factor K to generate PVDDSENSE, which is then compared against PVDDREF. This comparison may be expressed as PVDDSENSE = [PVDD/K - (n-1)VBAT/K], where n represents the gain of the charge pump. Here, n increments by 1 each time there is a gain up requirement. In some aspects, K may be chosen to be greater than VBAT. By implementing this feedback mechanism, the control circuit may effectively manage multiple gain stages while maintaining inrush current control and voltage regulation.

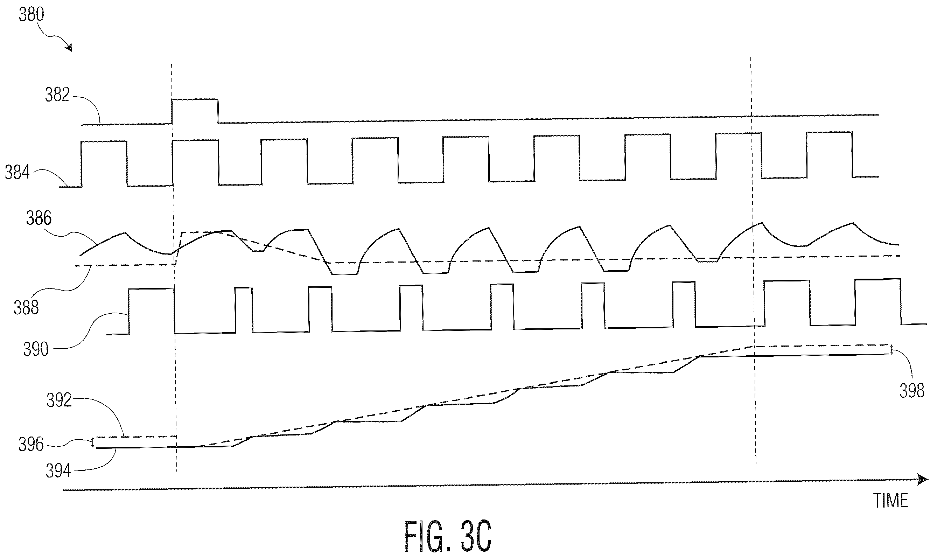

Referring to FIG. 3C, a CP control plot 380 is illustrated, showing various signals over time during a gain-up phase of a CP. The plot 380 includes several signals that represent different aspects of the CP operation, including an enable gain up phase signal 382, a CP Clock signal 384, a VCF signal 386 representing the voltage across the fly capacitor, a Cflyref signal 388 representing the fly capacitor reference voltage, a PH2 signal 390 representing the durations of the transfer phases of the CP, a PVDDREF signal 392 representing the internal reference voltage ramp, and a PVDDSENSE signal 394 representing the sensed output voltage of the CP. The plot 380 also shows two offsets 396 and 398 between the PVDDREF signal 392 and the PVDDSENSE signal 394 at the beginning and end of the gain-up phase.

The enable gain up phase signal 382 transitions high at the beginning of the gain-up phase, initiating the process. The CP Clock signal 384 is shown as a continuous square wave throughout the plot, representing the periodic operation of the CP.

The VCF signal 386 exhibits a sawtooth waveform that gradually increases in amplitude with each charging phase and decreases with each transfer phase. This waveform represents the voltage across the fly capacitor, which may be charged during the charging phase and discharged during the transfer phase.

The Cflyref signal 388 initially spikes up based on the ramp control but then gradually decreases to steady state over the transfer phase. This signal represents the fly capacitor reference voltage, which may be used to control the voltage across the fly capacitor during the transfer phase.

The PH2 signal 390 represents the periodic transfer phases of the CP, with its duty cycle gradually increasing over the duration of the gain-up phase. This signal indicates the periods during which the charged fly capacitor may be connected in series with the load to boost the output voltage.

The PVDDREF signal 392 displays a linear ramp, serving as the reference for the output voltage. The slope of this ramp may be programmable, allowing system designers to define the desired ramp rate based on specific application requirements. In some aspects, the slope and reset of the ramp may be controlled by software running on a processor within the electronic device. This software control may allow for dynamic adjustment of the ramp characteristics based on various factors such as the current operating conditions, power requirements, or user preferences. The software may adjust the slope of the reference voltage ramp in real-time to optimize power efficiency or to meet specific performance requirements of different applications running on the device.

The PVDDSENSE signal 394 follows the PVDDREF signal 392, with a slight offset 396 at the beginning and converging towards the end. This signal represents the sensed output voltage of the CP, which may be compared with the PVDDREF signal 392 to generate the error signal for the voltage control loop. The offsets 396 and 398 between the PVDDREF signal 392 and the PVDDSENSE signal 394 represent the error between the desired output voltage and the actual output voltage. These offsets are used to adjust the operation of the CP to bring the output voltage closer to the desired level.

In some aspects, the control circuit may be configured to increase the duty cycle of the transfer phase when the output voltage is below the programmable reference voltage ramp and the fly capacitor voltage is greater than the fly capacitor reference voltage during the transfer phase. This can help to ensure that the CP draws the amount of current to complete the transition from a low voltage to a high voltage within a user-specified time.

In other aspects, the control circuit may be configured to turn off the transfer switches during the transfer phase when the output voltage is equal to or above the programmable reference voltage ramp. This can help to prevent excessive inrush current and maintain system stability.

In yet other aspects, the control circuit may be configured to reset the ramp and therefore the duty cycle of the transfer phase at the end of the gain-up phase. This can help to prepare the CP for the next gain-up phase, ensuring smooth transitions between different output voltage levels.

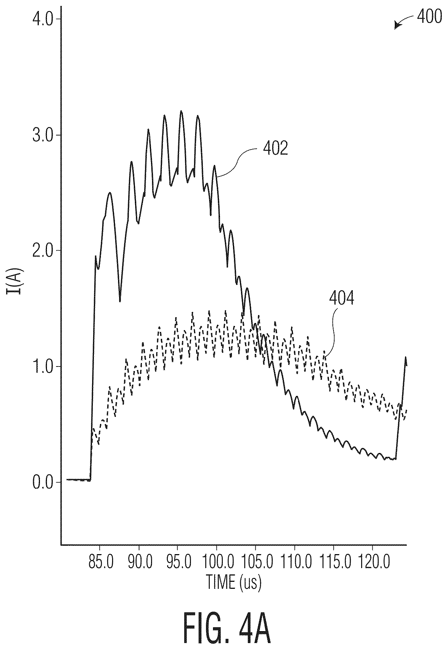

Referring to FIG. 4A, a CP current comparison plot 400 is illustrated. The plot 400 compares the current profiles of two different CP control methods over time: a VGS control method current 402 represented by a solid line, and the disclosed control method current 404 represented by a dashed line. The disclosed control method current 404 may be achieved by implementing the disclosed inrush current control method described in the present disclosure. This method involves controlling the voltage across a fly capacitor against a programmable reference voltage ramp, which can help to regulate the inrush current and maintain a controlled output voltage during transitions. The programmable reference voltage ramp may be adjusted based on the specific requirements of the application, allowing for flexible and efficient control of the CP operation.

The VGS control method current 402 exhibits higher peak currents and more pronounced oscillations compared to the disclosed control method current 404. This behavior indicates that the VGS control method may result in larger inrush currents during voltage transitions, which can potentially cause issues such as voltage drops, electromagnetic interference, and reduced battery life.

On the other hand, the disclosed control method current 404 demonstrates a smoother, more controlled current profile with lower peak values and reduced oscillations over the same time period. This behavior indicates that the solution control method, which may be implemented using the CP control circuit 300 described in FIG. 3A, can effectively regulate the inrush current during voltage transitions, thereby improving the performance and reliability of the CP.

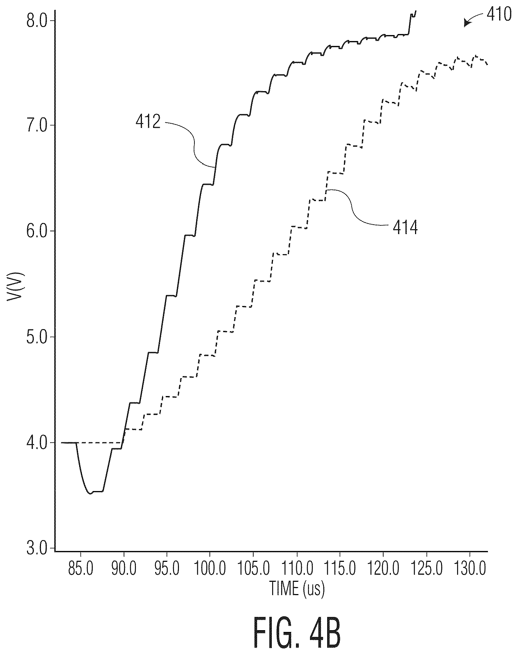

Referring to FIG. 4B, a CP voltage comparison plot 410 is illustrated. The plot 410 compares the voltage profiles of two different CP control methods over time: a VGS control voltage 412 represented by a solid line, and a disclosed control method voltage 414 represented by a dashed line. The disclosed control method voltage 414 may be achieved by implementing the disclosed inrush current control method described in the present disclosure. This method involves controlling the voltage across a fly capacitor against a programmable reference voltage ramp, which can help to regulate the inrush current and maintain a controlled output voltage during transitions. The programmable reference voltage ramp may be adjusted based on the specific requirements of the application, allowing for flexible and efficient control of the CP operation.

The VGS control method voltage 412 shows a rapid rise and reaches a higher final voltage than the solution control voltage 414. This rapid rise can cause large inrush currents, leading to potential issues such as voltage drops, electromagnetic interference, and reduced battery life. Moreover, the VGS control method voltage 412 also exhibits some initial undershoot before rising, which can cause additional instability in the system.

On the other hand, the disclosed control method voltage 414 demonstrates a more gradual, stepped increase. This behavior indicates that the solution control method, which may be implemented using the CP control circuit 300 described in FIG. 3A, can effectively regulate the inrush current during voltage transitions, thereby improving the performance and reliability of the CP.

Referring to FIG. 5, an electronic device 500 is illustrated. The electronic device 500 includes a processor 502, a CP 504, a load circuit 506, and a CP control circuit 508. The processor 502 may be connected to both the CP 504 and the CP control circuit 508. The CP control circuit 508 may be connected to and controls the CP 504. The CP 504 may be connected to and provides power to the load circuit 506.

The processor 502 manages the overall operation of the electronic device 500 and may provide control signals to the CP 504 and the CP control circuit 508. The processor 502 may be a microprocessor, a microcontroller, a digital signal processor, or any other type of processing device. In some cases, the processor 502 may include multiple processing cores for parallel processing, or it may include a single processing core for sequential processing.

The CP 504 may be a power supply circuit that converts an input voltage to a higher or lower output voltage. The CP 504 may be implemented using various CP topologies, such as a Dickson CP, a voltage doubler, a voltage inverter, a fractional CP, a switched-capacitor CP, a cross-coupled CP, a Fibonacci CP, an exponential CP, a multiphase CP, or an adaptive CP, among others. The specific topology of the CP 504 may be selected based on the specific requirements of the load circuit 506.

The load circuit 506 represents the circuit or device being powered by the CP 504. The load circuit 506 may include various components or circuits, such as an audio circuit, an RF circuit, a display circuit, a sensor circuit, or any other type of circuit that requires power. The load circuit 506 may also include various passive components, such as resistors, capacitors, and inductors, as well as active components, such as transistors, diodes, and integrated circuits.

The CP control circuit 508 regulates the operation of the CP 504. The CP control circuit 508 may include various components and circuitry for controlling the CP 504, such as a ramp control circuit, a multiplexer, a current source, a capacitor, a first comparator, a second comparator, a clamp circuit, and a logic circuit, among others. The CP control circuit 508 may be configured to control the current of the CP 504 by controlling a duty cycle of a transfer phase of the CP 504 during a gain-up stage according to a first comparison between a programmable reference voltage ramp and an output voltage across an output capacitor of the CP 504, and a second comparison between a fly capacitor reference voltage and a fly capacitor voltage of a fly capacitor of the CP 504.

In some aspects, the processor 502 may vary the ramp control according to the requirements of different devices within the electronic device 500 or based on different applications within the electronic device 500. For example, the processor 502 may increase or decrease the slope of the ramp as needed for performance and based on hardware limitations. This flexibility allows the electronic device 500 to adapt to a wide range of application requirements, providing increased (e.g. optimal) performance in each case.

In addition to audio and RF applications, the disclosed CP control method may be utilized in various other electronic systems that require efficient power management and voltage regulation. For example, in display driver circuits for mobile devices or wearable technology, the CP control method may be employed to dynamically adjust the voltage supplied to OLED or LCD panels. This dynamic adjustment can help optimize power consumption based on the displayed content, potentially extending battery life while maintaining display quality.

In some cases, the CP control method may be applied in sensor systems, such as those found in Internet of Things (IoT) devices or environmental monitoring equipment. These systems often require precise voltage regulation for accurate sensor readings while operating on limited power budgets. The controlled inrush current and programmable voltage ramp of the disclosed method may allow for more efficient power delivery to sensors, potentially improving their accuracy and longevity.

The CP control method may also find applications in energy harvesting systems, where power management is important due to the variable nature of energy sources. For instance, in solar-powered devices or systems that utilize piezoelectric energy harvesting, the CP may be used to efficiently convert and regulate the harvested energy. The ability to dynamically adjust the CP operation based on the available energy and load requirements may lead to improved overall system efficiency.

In some aspects, the disclosed CP control method may be beneficial in automotive electronics, particularly in electric and hybrid vehicles. The method may be used in voltage regulators for various subsystems, such as infotainment systems, advanced driver-assistance systems (ADAS), or battery management systems. The controlled inrush current and programmable voltage ramp may help reduce electromagnetic interference and improve the reliability of these important automotive systems.

While the foregoing is directed to example embodiments described herein, other and further example embodiments may be devised without departing from the basic scope thereof. For example, aspects of the present disclosure may be implemented in hardware or software or a combination of hardware and software. Portions of the disclosure described herein may be implemented as a program product for use with a computer system. The program(s) of the program product defines functions of the example embodiments (including the methods described herein) and may be contained on a variety of computer-readable storage media. Illustrative computer-readable storage media include, but are not limited to: (i) non-writable storage media (e.g., read-only memory (ROM) devices within a computer, such as CD-ROM disks readably by a CD-ROM drive, flash memory, ROM chips, or any type of solid-state non-volatile memory) on which information is permanently stored; and (ii) writable storage media (e.g., floppy disks within a diskette drive or hard-disk drive or any type of solid-state random-access memory) on which alterable information is stored. Such computer-readable storage media, when carrying computer-readable instructions that direct the functions of the presented example embodiments, are example embodiments of the present disclosure.

**It** will be appreciated by those skilled in the art that the preceding examples are exemplary and not limiting. It is intended that all permutations, enhancements, equivalents, and improvements thereto are apparent to those skilled in the art upon a reading of the specification and a study of the drawings are included within the true spirit and scope of the present disclosure. It is therefore intended that the following appended claims include all such modifications, permutations, and equivalents as fall within the true spirit and scope of these teachings.

### ASPECTS OF THE DISCLOSURE

Non-limiting aspects of the disclosure are set out in the following numbered clauses.
1. A charge pump control circuit, comprising: an internal reference voltage generator configured to generate a programmable reference voltage ramp; and a control circuit coupled to the internal reference voltage generator, the control circuit configured to control current of a charge pump circuit driving a load by controlling a duty cycle of a transfer phase of the charge pump circuit during a gain-up stage according to a first comparison between the programmable reference voltage ramp and an output voltage across an output capacitor of the charge pump circuit, and a second comparison between a fly capacitor reference voltage and a fly capacitor voltage of a fly capacitor of the charge pump circuit.
2. The charge pump control circuit of clause 1, further comprising: a first comparator coupled to the internal reference voltage generator and a feedback loop from the output capacitor to compare the output voltage across the output capacitor to the programmable reference voltage ramp, and a second comparator coupled to an output of the first comparator and the fly capacitor to compare a fly voltage across the fly capacitor to the fly capacitor reference voltage.
3. The charge pump control circuit of clause 2, further comprising a clamp circuit coupled to the output of the first comparator, wherein the clamp circuit is configured to clamp the output of the first comparator to a threshold less than a battery voltage of the charge pump circuit.
4. The charge pump control circuit of clause 2 or clause 3, further comprising logic circuitry coupled to the second comparator and a transfer switch of the charge pump, the logic circuitry configured to control the transfer switch to adjust the duty cycle of the charge pump circuit based on an output of the second comparator.
5. The charge pump control circuit of any preceding clause, wherein the internal reference voltage generator controls a slope of the programmable reference voltage ramp based on demand of the load.
6. The charge pump control circuit of any preceding clause, wherein the control circuit is further configured to increase the duty cycle of the transfer phase when the output voltage is below the programmable reference voltage ramp and the fly capacitor voltage is greater than the fly capacitor reference voltage during the transfer phase.
7. The charge pump control circuit of any preceding clause, wherein the control circuit is further configured to reset the duty cycle of the transfer phase at a termination of the gain-up stage.
8. A method for controlling a charge pump circuit, comprising: generating a programmable reference voltage ramp; and controlling current of the charge pump circuit driving a load by controlling a duty cycle of a transfer phase of the charge pump circuit during a gain-up stage according to a first comparison between the programmable reference voltage ramp and an output voltage across an output capacitor of the charge pump circuit, and a second comparison between a fly capacitor reference voltage and a fly capacitor voltage of a fly capacitor of the charge pump circuit.
9. The method of clause 8, further comprising: comparing, using a first comparator, the output voltage across the output capacitor to the programmable reference voltage ramp; and comparing, using a second comparator coupled to an output of the first comparator, a fly voltage across the fly capacitor to the fly capacitor reference voltage.
10. The method of clause 9, further comprising clamping the output of the first comparator to a threshold less than a battery voltage of the charge pump circuit.
11. The method of clause 9 or clause 10, further comprising controlling a transfer switch of the charge pump to adjust the duty cycle of the charge pump circuit based on an output of the second comparator.
12. The method of any of clauses 8 to 11, further comprising controlling a slope of the programmable reference voltage ramp based on demand of the load.
13. The method of any of clauses 8 to 12, further comprising increasing the duty cycle of the transfer phase when the output voltage is below the programmable reference voltage ramp and the fly capacitor voltage is greater than the fly capacitor reference voltage during the transfer phase.
14. The method of any of clauses 8 to 13, further comprising resetting the duty cycle of the transfer phase at a termination of the gain-up stage.
15. An electronic device comprising: an audio circuit;
   a processor for controlling the audio circuit;
   a charge pump circuit for driving the audio circuit in accordance with the control of the processor; and
   a charge pump control circuit comprising:
      an internal reference voltage generator configured to generate a programmable reference voltage ramp in response to instructions from the processor, and
      a control circuit coupled to the internal reference voltage generator, the control circuit configured to control current of the charge pump circuit driving the audio circuit by controlling a duty cycle of a transfer phase of the charge pump circuit during a gain-up stage according to: a) a first comparison between the programmable reference voltage ramp and an output voltage across an output capacitor of the charge pump circuit, and b) a second comparison between a fly capacitor reference voltage and a fly capacitor voltage of a fly capacitor of the charge pump circuit.
16. The electronic device of clause 15, wherein the charge pump control circuit further comprises:
   a first comparator coupled to the internal reference voltage generator and a feedback loop from the output capacitor to compare the output voltage across the output capacitor to the programmable reference voltage ramp, and
   a second comparator coupled to an output of the first comparator and the fly capacitor to compare a fly voltage across the fly capacitor to the fly capacitor reference voltage.
17. The electronic device of clause 16, wherein the charge pump control circuit further comprises a clamp circuit coupled to the output of the first comparator, wherein the clamp circuit is configured to clamp the output of the first comparator to a threshold less than a battery voltage of the charge pump circuit.
18. The electronic device of clause 16 or clause 17, wherein the charge pump control circuit further comprises logic circuitry coupled to the second comparator and a transfer switch of the charge pump circuit, the logic circuitry is configured to control the transfer switch to adjust the duty cycle of the charge pump circuit based on an output of the second comparator.
19. The electronic device of any of clauses 15 to 18, wherein the internal reference voltage generator may control a slope of the programmable reference voltage ramp based on demand of the audio circuit.
20. The electronic device of any of clauses 15 to 19, wherein the control circuit is further configured to increase the duty cycle of the transfer phase when the output voltage is below the programmable reference voltage ramp and the fly capacitor voltage is greater than the fly capacitor reference voltage during the transfer phase.

## Claims

1. A charge pump control circuit, comprising:
an internal reference voltage generator configured to generate a programmable reference voltage ramp; and
a control circuit coupled to the internal reference voltage generator, the control circuit configured to control current of a charge pump circuit driving a load by controlling a duty cycle of a transfer phase of the charge pump circuit during a gain-up stage according to a first comparison between the programmable reference voltage ramp and an output voltage across an output capacitor of the charge pump circuit, and a second comparison between a fly capacitor reference voltage and a fly capacitor voltage of a fly capacitor of the charge pump circuit.

2. The charge pump control circuit of claim 1, further comprising:
a first comparator coupled to the internal reference voltage generator and a feedback loop from the output capacitor to compare the output voltage across the output capacitor to the programmable reference voltage ramp, and
a second comparator coupled to an output of the first comparator and the fly capacitor to compare a fly voltage across the fly capacitor to the fly capacitor reference voltage.

3. The charge pump control circuit of claim 2, further comprising a clamp circuit coupled to the output of the first comparator, wherein the clamp circuit is configured to clamp the output of the first comparator to a threshold less than a battery voltage of the charge pump circuit.

4. The charge pump control circuit of claim 2 or claim 3, further comprising logic circuitry coupled to the second comparator and a transfer switch of the charge pump, the logic circuitry configured to control the transfer switch to adjust the duty cycle of the charge pump circuit based on an output of the second comparator.

5. The charge pump control circuit of any preceding claim, wherein the internal reference voltage generator controls a slope of the programmable reference voltage ramp based on demand of the load.

6. The charge pump control circuit of any preceding claim, wherein the control circuit is further configured to increase the duty cycle of the transfer phase when the output voltage is below the programmable reference voltage ramp and the fly capacitor voltage is greater than the fly capacitor reference voltage during the transfer phase.

7. The charge pump control circuit of any preceding claim, wherein the control circuit is further configured to reset the duty cycle of the transfer phase at a termination of the gain-up stage.

8. A method for controlling a charge pump circuit, comprising:
generating a programmable reference voltage ramp; and
controlling current of the charge pump circuit driving a load by controlling a duty cycle of a transfer phase of the charge pump circuit during a gain-up stage according to a first comparison between the programmable reference voltage ramp and an output voltage across an output capacitor of the charge pump circuit, and a second comparison between a fly capacitor reference voltage and a fly capacitor voltage of a fly capacitor of the charge pump circuit.

9. The method of claim 8, further comprising:
comparing, using a first comparator, the output voltage across the output capacitor to the programmable reference voltage ramp; and
comparing, using a second comparator coupled to an output of the first comparator, a fly voltage across the fly capacitor to the fly capacitor reference voltage.

10. The method of claim 9, further comprising clamping the output of the first comparator to a threshold less than a battery voltage of the charge pump circuit.

11. The method of claim 9 or claim 10, further comprising controlling a transfer switch of the charge pump to adjust the duty cycle of the charge pump circuit based on an output of the second comparator.

12. The method of any of claims 8 to 11, further comprising controlling a slope of the programmable reference voltage ramp based on demand of the load.

13. The method of any of claims 8 to 12, further comprising increasing the duty cycle of the transfer phase when the output voltage is below the programmable reference voltage ramp and the fly capacitor voltage is greater than the fly capacitor reference voltage during the transfer phase.

14. The method of any of claims 8 to 13, further comprising resetting the duty cycle of the transfer phase at a termination of the gain-up stage.

15. An electronic device comprising:
an audio circuit;
a processor for controlling the audio circuit;
a charge pump circuit for driving the audio circuit in accordance with the control of the processor; and
the charge pump control circuit of any of claims 1 to 7,
wherein the internal reference voltage generator is configured to generate the programmable reference voltage ramp in response to instructions from the processor, and
wherein the load comprises the audio circuit.
